# EUROPEAN PATENT APPLICATION

(11) **EP 4 438 888 A1**
(43) Date of publication of application: **02.10.2024**
(21) Application number: 23382310.3
(22) Date of filing: 31.03.2023
(51) Int. Cl.: F03D 1/06, F03D 7/02

(54) **WIND TURBINE BLADE VORTEX REDUCTION**

(71) Applicant: Siemens Gamesa Renewable Energy Innovation & Technology S.L., 31621 Sarriguren (Navarra) (ES)
(72) Inventor: Logothetis, Dimitrios, 28012 Madrid (ES)
(74) Representative: SGRE-Association

(57) **Abstract**

The present invention relates to a tip extension (1) for a tip section (2) of a wind turbine blade (3) of a wind turbine (4), comprising a first section (5) for facing in a direction of a root section (6) of the wind turbine blade (3) and an adjacent second section (7) for facing in a direction away from the root section (6) of the wind turbine blade (3), wherein the first section (5) and the second section (7) are arranged along a span-wise axis (S), thus defining a length of the tip extension (1), and a width of the tip extension (1) is defined by a chord-wise axis (C). The tip extension (1) for a tip section (2) of a wind turbine blade (3) of a wind turbine (4) comprises a first section (5) for facing in a direction of a root section (6) of the wind turbine blade (3) and an adjacent second section (7) for facing in a direction away from the root section (6) of the wind turbine blade (3), wherein the first section (5) and the second section (7) are arranged along a span-wise axis (S), thus defining a length of the tip extension (1), and a width of the tip extension (1) is defined by a chord-wise axis (C). The invention also relates to a wind turbine blade (3) for a wind turbine (4) and a wind turbine (4) for generating electric power from wind energy.

## Description

The present invention relates to a tip extension for a wind turbine blade of a wind turbine. The invention also relates to a wind turbine blade for a wind turbine with a generic tip extension and a wind turbine for generating electric power from wind energy with a generic wind turbine blade.

The Paris agreement together with the rising energy costs have highlighted the importance to provide solutions and technologies for improved performances of future and/or installed wind turbines. From an aerodynamic point of view, in order to efficiently convert the wind kinetic energy of the wind to electric power, the target is to increase the overall lift magnitude and improve the lift distribution along the blade's surface together with the maximum possible drag reduction.

Lifting conditions create flow conditions of high-pressure difference between the pressure side and lee side of the blade. Naturally, the flow moves from conditions of high pressure to low pressure, generating a vortex at the tip of the blade. Wingtip vortices however induce drag. The so-called induced drag is the aerodynamic penalty of creating lift.

Induced drag is dependent on the lift magnitude and the kinetic energy of the vortex, which is further related to the radius and rotational speed of the vortex. The bigger the wingtip vortex development in the wake, the bigger the induced drag. An approach to handle vortex problems for aerodynamical devices is known from document US 5 823 480 A1. For wind turbines, there are no known solutions to this problem.

It is therefore the object of the present invention to eliminate or at least partially eliminate the disadvantages described above in the case of a wind turbine blade for a wind turbine. In particular, it is the object of the present invention to improve the design of a wind turbine blade for a wind turbine to mitigate the impact of induced drag and improve the aerodynamic performance of a wind turbine in a simple and inexpensive manner. Preferably, the solution is applicable for already installed and planned, offshore and onshore wind turbines.

The above object is achieved by the claims. Accordingly, the problem is solved by a tip extension for a tip section of a wind turbine blade of a wind turbine with the features of the independent claim 1, by a wind turbine blade for a wind turbine with the features of the subordinate claim 11 and by a wind turbine for generating electric power from wind energy with the features of the subordinate claim 14. Further features and details of the invention emerge from the subclaims, the description and the drawings. Features and details that are described in connection with the tip extension according to the invention naturally also apply in connection with the wind turbine blade and the wind turbine according to the invention and vice versa, so that with regard to the disclosure of the individual aspects of the invention, reference is or can always be made to each other.

According to a first aspect of the invention, the object is achieved by a tip extension for a tip section of a wind turbine blade of a wind turbine. The tip extension comprises a first section for facing in a direction of a root section of the wind turbine blade and an adjacent second section for facing in a direction away from the root section of the wind turbine blade, wherein the first section and the second section are arranged along a span-wise axis, thus defining a length of the tip extension, and a width of the tip extension is defined by a chord-wise axis. According to the invention, the second section comprises a plurality of wing elements, distributed along the chord-wise axis, wherein adjacent wing elements are mutually spaced apart by a wing gap, wherein the wing elements comprise a wing root adjacent to the first section and a wing tip end, facing away from the first section.

The tip extension can be configured as a separate part for being attached to a used wind turbine blade, e.g., in a reconfiguration or repair process of the wind turbine blade. For this purpose, the tip extension can be configured for encompassing a part of the tip section of the wind turbine blade and/or for being laminated and/or bolted onto the wind turbine blade. Alternatively, the tip extension can be configured for being a part of the production components for the manufacturing process of a new wind turbine blade. Thus, the tip extension can be integrated into the structure of the wind turbine blade, especially into the structure of the tip section, in the manufacturing process of the wind turbine blade already.

The tip extension comprises two sections, namely the first section and the second section. The first section is adjacent to the second section. Preferably, the first section and the second section are configured as one integral part, preferably in a way that there is no structural transition between the first section and the second section existing. Within the scope of the present application, a structural transition can be an interstice, offset, material change step or the like. Alternatively, the first section and the second section can be configured as two parts which are joined together, e.g., by glue, bolts or the like. The first section and the second section are configured for being arranged along the span-wise axis. By this means, the length of the tip extension is defined. The width of the tip extension is defined by the chord-wise axis.

The first section is configured for being arranged at the tip section of the wind turbine blade. This means that the first section can be configured as a part of the tip section of the wind turbine blade or as an adapter section for being coupled with the tip section of the wind turbine blade. Preferably, the first section is configured in a way that there is no visible and/or tactile structural transition between the first section and the adjacent section of the wind turbine blade existing.

The second section is configured for facing in a direction away from the tip section of the wind turbine blade. In a mounted state, the second section constitutes an end section of the wind turbine blade along the span-wise axis. The second section comprises the plurality of wing elements. The wing elements are distributed along the chord-wise axis. Between adjacent wing elements, a wing gap is provided. Furthermore, the wing elements comprise the wing root, which is adjacent to the first section, and the wing tip end, which is facing away from the first section and, thus, in a mounted state, constituting the end of the wind turbine blade with respect to the span-wise axis. Preferably, the wing elements are mutually parallel.

A tip extension according to the invention has the advantage over conventional vortex reduction means that in a simple and inexpensive way, the dimension of the vortices can be reduced significantly. By these means, a reduction of the induced drag of the wind turbine blade as well as operational noises of the wind turbine can be reduced as well. Moreover, with the tip extension, an existing wind turbine blade can be upgraded in an easy and cost-efficient manner.

According to a preferred further development of the invention, a tip extension can provide that the first section constitutes a first leading edge of the tip extension for being aligned with a blade leading edge of the wind turbine blade and/or that the first section constitutes a first trailing edge of the tip extension for being aligned with a blade trailing edge of the wind turbine blade. The wind turbine blade has a leading edge and a trailing edge, wherein during operation, the trailing edge follows the movement of the leading edge. The tip extension is preferably configured such that in a mounted state, the leading edge of the tip extension is in line with the leading edge of the wind turbine blade and/or that the trailing edge of the tip extension is in line with the trailing edge of the wind turbine blade. This has the advantage that in a simple and inexpensive way, the aerodynamical properties of the wind turbine blade with tip extensions are further improved.

It is preferred according to the invention that a first wing element of the wing elements constitutes a wing leading edge of the tip extension, wherein the first leading edge and the wing leading edge constitute a continuous extension leading edge of the tip extension, and/or that a last wing element of the wing elements constitutes a wing trailing edge of the tip extension, wherein the first trailing edge and the wing trailing edge constitute a continuous extension trailing edge of the tip extension. Within the scope of the invention, a continuous leading edge is considered a leading edge without a step. Preferably, the continuous leading edge is configured as a straight. Moreover, and within the scope of the invention, a continuous trailing edge is considered a trailing edge without a step. Preferably, the continuous trailing edge is configured as a straight. This has the advantage that in a simple and inexpensive way, the aerodynamical properties of the tip extension can be further improved.

More preferred, an angle between the wing leading edge and the blade leading edge is between 0° and 45°. Additionally, or alternatively, an angle between the wing trailing edge and the blade trailing edge is between 0° and 45°. It is preferred that both angles are the same. Preferably, the angle is such that the wing elements follow the movement of the wind turbine blade during operation. Further preferred, the wing leading edge is in line with the first leading edge and/or the wing trailing edge is in line with the first trailing edge. This has the advantage that in a simple and inexpensive way, the aerodynamical properties of the tip extension can be further improved.

In a particularly preferred embodiment, a wing width of at least one of the wing elements is between 90 % and 120 % of a width of an adjacent wing gap. Preferably, the wing width of at least one of the wing elements is larger than the width of the adjacent wing gap. It is preferred that the wing elements have the same wing width. Further preferred, the wing gaps have the same width. This has the advantage that in a simple and inexpensive way, the aerodynamical properties of the tip extension can be further improved.

Preferably, a wing width of the wing elements is constant for at least one wing element and/or a width of the wing gaps is constant for at least one wing gap. Preferably, the wing width of the wing elements is constant for all wing elements. Further preferred, a width of the wing gaps is constant for all wing gaps. A constant width means e.g., that a projection has a shape of a rectangle or parallelogram, wherein edges may be optionally rounded. This has the advantage that in a simple and inexpensive way, the aerodynamical properties of the tip extension can be further improved.

According to a preferred embodiment of the invention, the wing tip end of at least one of the wing elements is angular with respect to the chord-wise axis and/or the wing tip end of at least one of the wing elements has a rounded shape and/or beveled shape. A preferred angle between the chord-wise axis and the wing tip end is 30° or less than 30°, preferably about 20°. The rest of the wing tip end can be straight or curved. Edges of the wing tip end can be beveled or rounded. Preferably, an edge on the side of the leading edge is rounded and an edge on the side of the trailing edge is angular. It is preferred that all wing elements have the same shape of the wing tip end. This has the advantage that in a simple and inexpensive way, the aerodynamical properties of the tip extension can be further improved.

Particularly preferred, a side of at least one of the wing gaps which is adjacent to the first section comprises a rounded shape and/or beveled shape. Preferably, the sides of all wing gaps which are adjacent to the first section comprise a rounded shape and/or beveled shape. This has the advantage that in a simple and inexpensive way, the aerodynamical properties of the tip extension can be further improved.

It is preferred according to the invention that a wing length of the wing elements is constant for the wing elements or that the wing length of the wing elements increases along the chord-wise axis from a leading side to a trailing side of the tip extension. According to a preferred first alternative, all wing elements have the same wing length with respect to the span-wise axis. According to a preferred second alternative, the wing elements which are closer to the leading side are longer than the wing elements which are closer to the trailing side of the tip extension. For both alternatives, it is preferred that the wing roots of the wing elements are at the same height with respect to the span-wise axis. This has the advantage that in a simple and inexpensive way, the aerodynamical properties of the tip extension can be further improved.

Preferably, the plurality of wing elements of the second section comprises 2, 3 or 4 wing elements. It is preferred that a tip extension comprises four wing elements. This has the advantage that in a simple and inexpensive way, the aerodynamical properties of the tip extension can be further improved.

According to a second aspect of the invention, the object is achieved by a wind turbine blade for a wind turbine. The wind turbine blade comprises a root section and a tip section with a blade tip end, wherein the wind turbine blade comprises a pressure side, a suction side, a blade leading edge and a blade trailing edge. According to the invention, at the blade tip end, a tip extension according to the first aspect of the invention is provided. It is preferred that the wind turbine blade is made of a composite material. Preferably, the root section and at least a part of the tip section are configured as one piece.

The wind turbine blade according to the invention has all the advantages that have already been described for a tip extension according to the first aspect of the invention. Accordingly, the wind turbine blade according to the invention has the advantage over conventional wind turbine blades that in a simple and inexpensive way, the dimension of the vortices can be reduced significantly. By these means, a reduction of the induced drag of the wind turbine blade as well as operational noises of the wind turbine can be reduced.

It is preferred that the blade tip end comprises an adapter device, wherein the tip extension is mounted onto the adapter device. For this purpose, it is preferred that the tip extension comprises a form fit section for being paired with a form fit section of the adapter device. This configuration is preferably such that interstices between the blade tip end and the tip extension are smoothened for avoiding additional vortices. This has the advantage that in a simple and inexpensive way, the manufacturing and retrofit of the wind turbine blade can be improved.

According to a preferred alternative configuration of the invention, the tip extension is glued to the blade tip end or the tip extension is integrally formed with the tip section. The first alternative is also suitable for retrofitting an existing wind turbine blade with a tip extension. The second alternative is suitable for the manufacturing of a new wind turbine blade. This has the advantage that in a simple and inexpensive way, the manufacturing and retrofit of the wind turbine blade can be improved.

According to a third aspect of the invention, the object is achieved by a wind turbine for generating electric power from wind energy. The wind turbine comprises a tower, a nacelle mounted onto the tower, a generator for generating electricity from rotational energy and a rotor system with a rotor, mechanically coupled to the generator. According to the invention, the rotor system comprises at least one wind turbine blade according to the second aspect of the invention, wherein the wind turbine blade is mounted to the rotor, especially to a hub of the rotor.

The wind turbine according to the invention has all the advantages that have already been described for a tip extension according to the first aspect of the invention and for a wind turbine blade according to the second aspect of the invention. Accordingly, the wind turbine according to the invention has the advantage over conventional wind turbines that in a simple and inexpensive way, the dimension of the vortices can be reduced significantly. By these means, a reduction of the induced drag of the wind turbine blade as well as operational noises of the wind turbine can be reduced.

Further advantages, features and details of the invention unfold from the following description, in which by reference to drawings, working examples of the present invention are described in detail. Thereby, the features from the claims as well as the features mentioned in the description can be essential for the invention as taken alone or in an arbitrary combination. In the drawings:
Figure 1 shows a schematic perspective view of a wind turbine according to a preferred embodiment of the invention,
Figure 2 shows a schematic top view of a tip section of a wind turbine blade with a tip extension according to a preferred first embodiment of the invention,
Figure 3 shows a schematic top view of a tip section of a wind turbine blade with a tip extension according to a preferred second embodiment of the invention,
Figure 4 shows a schematic top view of a tip section of a wind turbine blade with a tip extension according to a preferred third embodiment of the invention,
Figure 5 shows a schematic top view of a tip section of a wind turbine blade with a tip extension according to a preferred fourth embodiment of the invention, and
Figure 6 shows a schematic top view of a tip section of a wind turbine blade with a tip extension according to a preferred fifth embodiment of the invention.

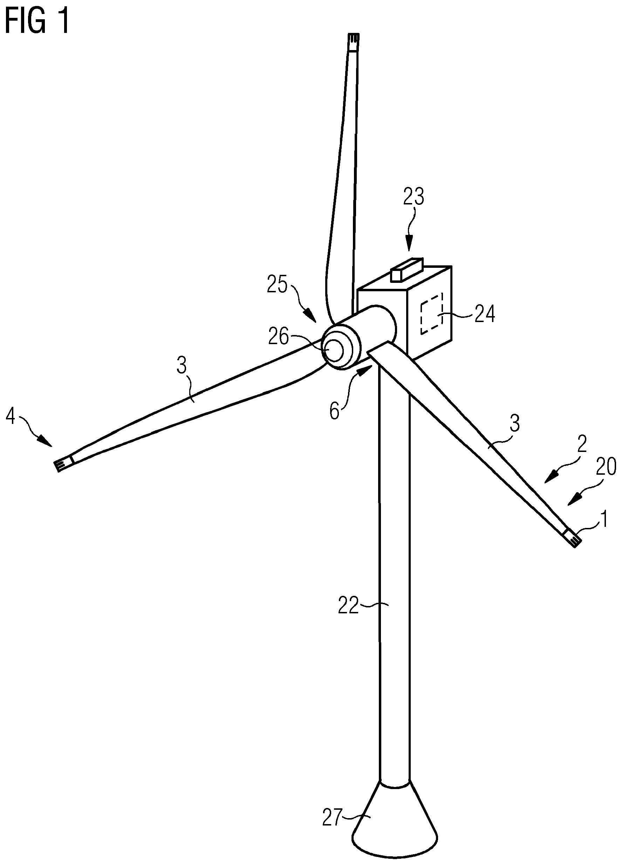

Elements with the same function and effectiveness are denoted each in figures 1 - 6 with the same reference numbers.

In fig. 1, a wind turbine 4 according to a preferred embodiment of the invention is shown in a schematic perspective view. The wind turbine 4 comprises a foundation 27, a tower 22 mounted onto the foundation 27 and a nacelle 23 mounted onto the tower 22. At the nacelle 23, a rotor system 25 with a rotor 26 is provided. A generator 24 for converting rotational energy of the rotor 26 is located within the nacelle 23 and mechanically coupled with the rotor 26. The rotor system 25 further comprises three wind turbine blades 3 according to the invention. Each wind turbine blade 3 comprises a root section 6 and a tip section 2 with a blade tip end 20. At each blade tip end 20, a tip extension 1 according to the invention is provided.

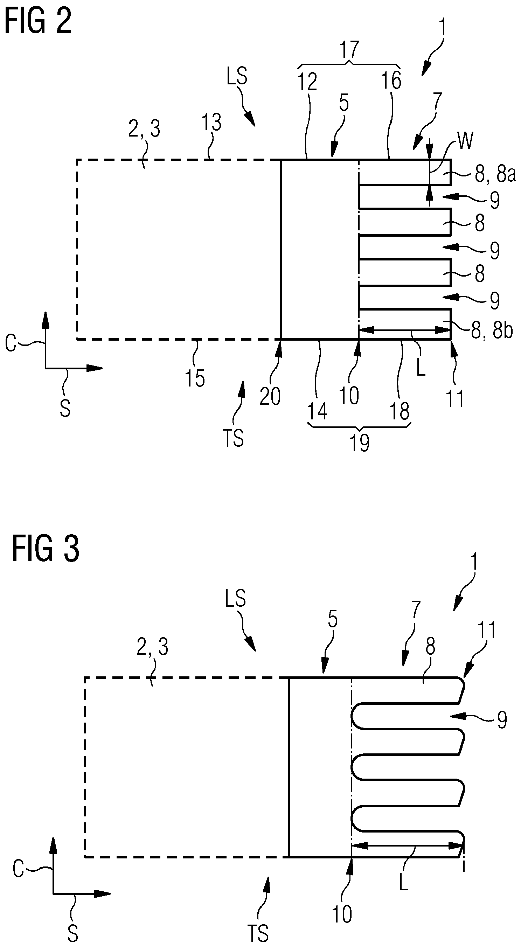

In fig. 2, a wind turbine blade 3 with a tip extension 1 according to a preferred first embodiment of the invention is shown in a schematic top view. The tip extension 1 comprises a first section 5 and a second section 7. The first section 5 is attached to the blade tip end 20 of the tip section 2 of the wind turbine blade 3. The second section 7 is integrally formed with the first section 5. The second section 7 comprises four wing elements 8, distributed along a chord-wise axis C and mutually spaced apart by wing gaps 9. The wing elements 8 have a wing root 10, adjacent to the first section 5 and a wing tip end 11, facing away from the first section 5 along a span-wise axis S of the wind turbine blade 3. The wing elements 8 and the wing gaps 9 have rectangular cross-sections.

In this preferred embodiment, four wing elements 8 are provided. Alternatively, two or three wing elements 8 could be provided. The wing elements 8 have the same wing width W with respect to the chord-wise axis C and the same wing length L with respect to a span-wise axis S. The wing elements 8 are mutually arranged parallel.

A first wing element 8a of the wing elements 8 is located at a leading side LS of the tip extension 1, providing a wing leading edge 16. By the first section 5, in line with the wing leading edge 16, a first leading edge 12 is formed. The first leading edge 12 and the wing leading edge 16 constitute an extension leading edge 17. The extension leading edge 17 is in line with a blade leading edge 13 of the wind turbine blade 3.

A last wing element 8b of the wing elements 8 is located at a trailing side TS of the tip extension 1, providing a wing trailing edge 18. By the first section 5, in line with the wing trailing edge 18, a first trailing edge 14 is formed. The first trailing edge 14 and the wing trailing edge 18 constitute an extension trailing edge 19. The extension trailing edge 19 is in line with a blade trailing edge 15 of the wind turbine blade 3. In this example, the tip extension 1 is integrally formed with the wind turbine blade 3. Alternatively, the tip extension 1 can be provided as a separate part, attached to the wind turbine blade 3 e.g., by gluing, bolting or the like.

In fig. 3, a wind turbine blade 3 with a tip extension 1 according to a preferred second embodiment of the invention is shown in a schematic top view. The second embodiment differs from the first embodiment by the shapes of the wing elements 8 and the wing gaps 9. Edges of the wing tip ends 11, facing towards the leading side LS, are rounded. Moreover, the wing tip ends 11 are beveled in a way that the extension of each wing element 8 along the span-wise axis S decreases from the leading side LS towards the trailing side TS. However, the wing elements 8 still have the same wing length L.

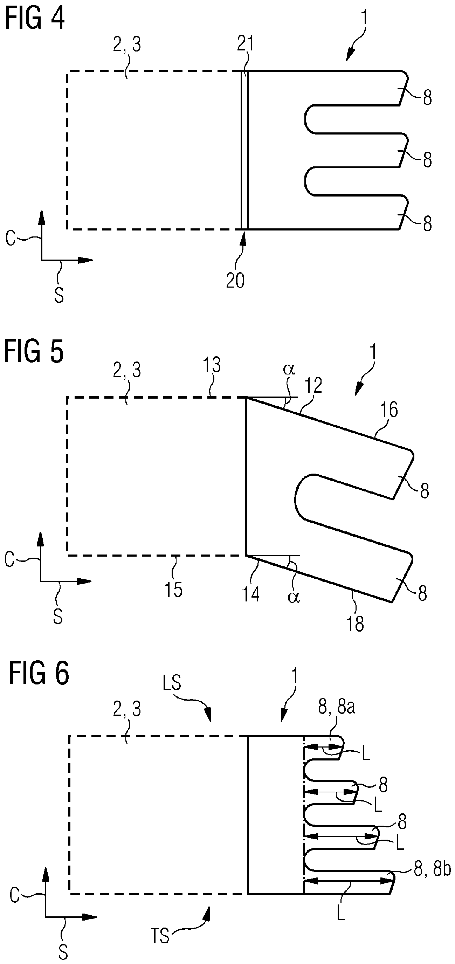

In fig. 4, a wind turbine blade 3 with a tip extension 1 according to a preferred third embodiment of the invention is shown in a schematic top view. The third embodiment differs from the second embodiment by the number of the wing elements 8 and a coupling between the wind turbine blade 3 and the tip extension 1. In this embodiment, three wing elements 8 are provided. Alternatively, two or four wing elements 8 could be provided. Moreover, the wind turbine blade 3 comprises an adapter device 21 at the blade tip end 20, wherein the tip extension 1 is attached to the adapter device 21 e.g., by gluing, bolting or the like.

In fig. 5, a wind turbine blade 3 with a tip extension 1 according to a preferred fourth embodiment of the invention is shown in a schematic top view. The fourth embodiment differs from the second embodiment by the number and an orientation of the wing elements 8. In this embodiment, two wing elements 8 are provided. Alternatively, three or four wing elements 8 could be provided. Moreover, between the first leading edge 12 and the blade leading edge 13, an angle α is formed. Furthermore, between the first trailing edge 14 and the blade trailing edge 15, the same angle α is formed.

In fig. 6, a wind turbine blade 3 with a tip extension 1 according to a preferred fifth embodiment of the invention is shown in a schematic top view. The fifth embodiment differs from the second embodiment by the wing lengths L of the wing elements 8. From the leading side LS to the trailing side TS, the wing lengths L of the wing elements 8 increase. Thus, the first wing element 8a is the shortest wing element 8 and the last wing element 8b is the longest wing element 8.

## Claims

1. Tip extension (1) for a tip section (2) of a wind turbine blade (3) of a wind turbine (4), comprising a first section (5) for facing in a direction of a root section (6) of the wind turbine blade (3) and an adjacent second section (7) for facing in a direction away from the root section (6) of the wind turbine blade (3), wherein the first section (5) and the second section (7) are arranged along a span-wise axis (S), thus defining a length of the tip extension (1), and a width of the tip extension (1) is defined by a chord-wise axis (C),
**characterized in**
**that** the second section (7) comprises a plurality of wing elements (8), distributed along the chord-wise axis (C), wherein adjacent wing elements (8) are mutually spaced apart by a wing gap (9), wherein the wing elements (8) comprise a wing root (10) adjacent to the first section (5) and a wing tip end (11), facing away from the first section (5).

2. Tip extension (1) according to claim 1,
**characterized in**
**that** the first section (5) constitutes a first leading edge (12) of the tip extension (1) for being aligned with a blade leading edge (13) of the wind turbine blade (3) and/or that the first section (5) constitutes a first trailing edge (14) of the tip extension (1) for being aligned with a blade trailing edge (15) of the wind turbine blade (3).

3. Tip extension (1) according to claim 2,
**characterized in**
**that** a first wing element (8a) of the wing elements (8) constitutes a wing leading edge (16) of the tip extension (1), wherein the first leading edge (12) and the wing leading edge (16) constitute a continuous extension leading edge (17) of the tip extension (1) and/or that a last wing element (8b) of the wing elements (8) constitutes a wing trailing edge (18) of the tip extension (1), wherein the first trailing edge (14) and the wing trailing edge (18) constitute a continuous extension trailing edge (19) of the tip extension (1).

4. Tip extension (1) according to claim 3,
**characterized in**
**that** an angle (α) between the wing leading edge (16) and the blade leading edge (13) is between 0° and 45° and/or that an angle (α) between the wing trailing edge (18) and the blade trailing edge (15) is between 0° and 45°.

5. Tip extension (1) according to any of the previous claims,
**characterized in**
**that** a wing width (w) of at least one of the wing elements (8) is between 90 % and 120 % of a width of an adjacent wing gap (9).

6. Tip extension (1) according to any of the previous claims,
**characterized in**
**that** a wing width (w) of the wing elements (8) is constant for at least one wing element (8) and/or that a width of the wing gaps (9) is constant for at least one wing gap (9).

7. Tip extension (1) according to any of the previous claims,
**characterized in**
**that** the wing tip end (11) of at least one of the wing elements (8) is angular with respect to the chord-wise axis (C) and/or has a rounded shape and/or beveled shape.

8. Tip extension (1) according to any of the previous claims,
**characterized in**
**that** a side of at least one of the wing gaps (9) which is adjacent to the first section (5) comprises a rounded shape and/or beveled shape.

9. Tip extension (1) according to any of the previous claims,
**characterized in**
**that** a wing length (L) of the wing elements (8) is constant for the wing elements (8) or that the wing length (L) of the wing elements (8) increases along the chord-wise axis (C) from a leading side (LS) to a trailing side (TS) of the tip extension (1).

10. Tip extension (1) according to any of the previous claims,
**characterized in**
**that** the plurality of wing elements (8) of the second section (7) comprises 2, 3 or 4 wing elements (8).

11. Wind turbine blade (3) for a wind turbine (4), comprising a root section (6) and a tip section (2) with a blade tip end (20), wherein the wind turbine blade (3) comprises a pressure side, a suction side, a blade leading edge (13) and a blade trailing edge (15),
**characterized in**
**that** at the blade tip end (20), a tip extension (1) according to any of the previous claims is provided.

12. Wind turbine blade (3) according to claim 11,
**characterized in**
**that** the blade tip end (20) comprises an adapter device (21), wherein the tip extension (1) is mounted onto the adapter device (21).

13. Wind turbine blade (3) according to claim 11,
**characterized in**
**that** the tip extension (1) is glued to the blade tip end (20) or that the tip extension is integrally formed with the tip section (2).

14. Wind turbine (4) for generating electric power from wind energy, comprising a tower (22), a nacelle (23) mounted onto the tower (22), a generator (24) for generating electricity from rotational energy and a rotor system (25) with a rotor (26), mechanically coupled to the generator (24),
**characterized in**
**that** the rotor system (25) comprises at least one wind turbine blade (3) according to any of claims 11 to 13, mounted to the rotor (26).
